# EUROPEAN PATENT APPLICATION

(11) **EP 3 462 339 A1**
(43) Date of publication of application: **03.04.2019**
(21) Application number: 17193741.0
(22) Date of filing: 28.09.2017
(51) Int. Cl.: G06F 17/30

(54) **METHOD AND MESSAGE HANDLER FOR PROCESSING A QUERY**

(71) Applicant: Siemens Aktiengesellschaft, 80333 München (DE)
(72) Inventor: Bröring, Arne, 81541 München (DE); Käbisch, Sebastian, 86163 Augsburg (DE)

(57) **Abstract**

The proposed embodiments relate to means for processing a query. A graph query request message is decomposed into a plurality of query components which are assigned to a plurality of query execution engine or processing engines. Results received are then aggregated or combined in order to generate a response to the graph query. The query components are differentiated between query components expressed in a graph query syntax and query components expressed by a syntax which is not conforming to the graph query syntax. Advantageously, restricted graph query languages can be extended to support more flexible search and selection and allowing for flexible insertion and retrieval of new data types, thereby extending capabilities of a graph data model.

## Description

### TECHNICAL FIELD

The disclosed embodiments relate to a message handler and a method for processing a query.

### BACKGROUND

Various query languages have evolved over time. Query languages in general are computer languages used to make queries in databases and information systems.

A commonly known query language entitled »Structured Query Language« or SQL is applied for querying relational databases. In recent times, however, a usage of graph databases has increased over relational databases due to their enhanced efficiency. Graph databases operate with a graph data model, wherein one or more graphs are used to model structural relationships between data objects. A major advantage of a graph data model is that changes to the data model can be made with little or no impact to an application querying the graph data base. It is therefore becoming increasingly popular to use graph databases in order to model complicated, large data sets in a variety of application domains such as social networks and using graph query languages dedicated for querying a graph data model.

An example for such a graph query language is GraphQL. This language allows an application to query and manipulate elements of a graph with a fixed and limited set of types. While this limitation in types is advantageously supporting an efficient querying in large graphs, it is excluding an addition of new types into the graph data model while maintaining the ability to query for these new types. In some cases this limitation poses a major drawback for application developers.

Accordingly there is a need in the art for extending capabilities of graph queries.

### SUMMARY

Embodiments for processing graph queries as described herein generally involve responding to graph queries.

In an exemplary embodiment a graph query request message submitted to a message handler is received. The graph query is then decomposed into a plurality of query components. Then, for each of the query components, one of a plurality of query execution engines or processing engines that is available to process the query component is identified and results are received from these identified engines. The results received are then aggregated or combined in order to generate a response to the graph query. According to this embodiment, the identification of query components differentiates query components expressed in a graph query syntax - entitled first query components - and query components expressed by a syntax which is not conforming to the graph query syntax - entitled second query components. The latter second query components are also referred to as out-of-band query components. Both query components are phrases expressed in a sequence of characters.

According to an embodiment, a processing of the first query component includes accessing or amending at least one graph database by the query execution engine. While the act of accessing the graph data base is a regular operation of a graph query, an amendment of the graph database or the graph data model held therein is usually limited in order to preserve the restricted structure of the graph data model.

According to an embodiment, a processing of the second query component includes accessing or amending at least one graph database by the query execution engine. This means, that the message handler is operated to execute amendments of the graph database by the results of the second query components which are expressed by a syntax not conforming to the graph query syntax. According to this embodiment, the second query components - or out-of-band query components - may include function calls for functions executed by the processing engine for amending the graph database, i.e. adding, mutating or manipulating data entries therein.

According to an embodiment, the processing engine is additionally capable of accessing other kinds of databases including a relational database.

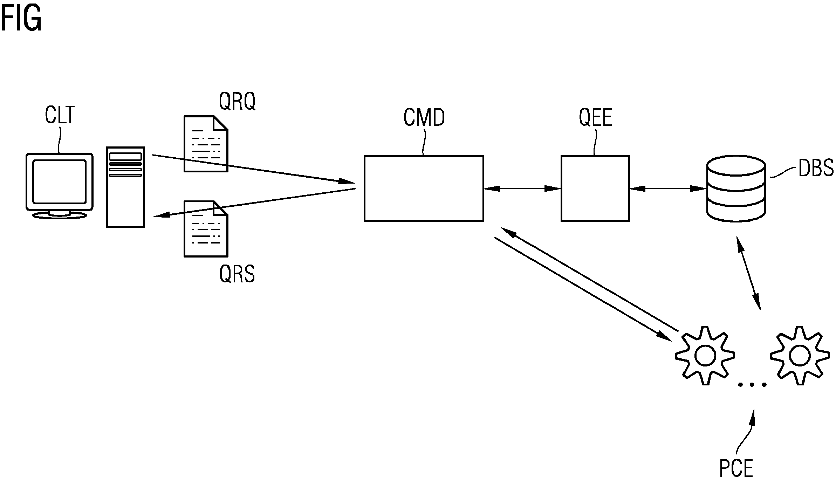

### DESCRIPTION OF THE DRAWING

FIG shows an environment of various entities for processing a query according to an embodiment of the invention.

### DETAILED DESCRIPTION

Referring now to the figure which illustrates various entities for sending, receiving, handling, processing, or answering a query request message QRQ.

In an exemplary embodiment, the query request message QRQ is initiated by a client CLT and sent to a message handler which includes a computing device CMD and which may include or make use of further components like a query execution engine QEE, a processing engine PCE and one or more databases DBS. Alternatively, said further components may be externally and communicatively coupled to the computing device CMD building a message handler of a slim nature in communication with said external components. Hereinafter, the outlines possible implementations will refer to the message handler CMD in general.

The query request message QRQ is expressed in a graph query language, e.g. GraphQL which is mainly defined and promoted by Facebook, Inc., Menlo Park, California, United States of America.

This graph query language has been designed for querying or manipulating graphs of web-based systems in order to maximize efficiency, scalability, and performance of a query execution and response retrieval. Such languages allow a client CLT to query and manipulate elements of a graph with a limited and known set of simple or complex types.

According to this limitation, this language is also referred to as a restricted graph query language.

In the following an example of a manipulation in GraphQL syntax is shown:

```
     mutation { addCircle {
          name: "my_circle"
          radius: 5
          color: { RGB: { red: 123, green: 43, blue: 72} }
          }
     }
```

This message adds or rather mutates a circle as a complex type including child element for name, radius, and color to the graph model. In order to specify the color, only a limited set of known types including a type »RGB« may be used, thereby providing static values for red, green, and blue color components. However, assigning an equivalent color value expressed by one single hexadecimal value is excluded by the GraphQL data model. This exclusion is a drawback for many web service developers, since a hexadecimal value for a color is typically used in an HTML (hypertext Markup Language) notation.

In the following, examples of GraphQL query request messages are shown, which would match some attributes of the circle defined by the mutation message shown above. First example:

```
     getCircle (radiusGreaterThan: 4)
     {
          name
          radius
          color { RGB { red }
     }
```

The first example query as shown above queries for circles having a radius greater than 4, thereby requesting name, radius, and the value for the red color component of said circles. The »getCircle« query call is pre-defined in the GraphQL data model. This query example shows a typical limitation of the GraphQL language: the search part
radiusGreaterThan: 4
as well as the data selection part
name
radius
color
of the query are both tightly bound to the limited set of types known to the GraphQL data model. Every query offered to the client needs to be pre-defined and implemented on a GraphQL server. A generic querying mechanism is not present.

A second example:

```
     getCircle (redGreaterThan: 100)
     {
          name
          color { RGB { red green blue}
     }
```

The second example query as shown above illustrates a further characteristic of restricted graph query languages: Since the types used for the different elements of the graph are known, specific queries on children of such elements can be implemented. For example, it is known that the color element is described using the RGB component type which consists of the children elements red, green and blue. It is therefore possible to pose a query for circles having a red value of more than 100 using the argument of »redGreaterThan: 100«. However, querying for circles with a color provided in a hexadecimal value or for a specific color transparency value is not possible, as the known type for color does not define hexadecimal representation or transparency values.

Possible ways of extending these limitations are offered by generic graph manipulation and query languages with flexible hard-typing. An example for such a generic language is SPARQL (a recursive acronym for SPARQL Protocol and RDF Query Language). This language allows for an import of previously unknown types into the data model. A listing as shown below:

```
     import http://schema_RGB
     insert { circle {
          name: "my_circle"
          radius: 5
          color: { http://schema_RGB: [123, 43, 72] }
          }
     }
```

outlines a first example of a pseudo SPARQL request using GraphQL syntax. In this first example, a circle is added to the data model by an insert command, whereby the color element of the circle is hard-typed by the type definition »http://schema_RGB«. The type definition can be resolved by the system in order to validate the specified value, here: an array of 3 numbers.

In a listing according to a second example as shown below:

```
     import http://schema_HEX
     insert { circle {
          name: "my_circle_2"
          radius: 6
          color: { http://schema_HEX: "#1234z6" }
          }
     }
```

shows a listing wherein a further circle is inserted to the data model using the type definition »http://schema_HEX« for its color element. Here, the value is a string representing a hexadecimal value code. Using this new type becomes possible by applying mechanisms of importing and resolving type definitions.

The mechanisms shown above are powerful. However, it is not possible to introduce them in restricted languages, such as GraphQL, which have a restricted hard-typing mechanism without the functionality of importing new and/or unknown types. Introducing such a flexible hard-typing mechanism would even harm the efficiency of the restricted language.

Another possible alternative of extending these limitations may be offered by a technique of soft-typing. The mechanism of soft-typing is based on key-value pairs. While the key defines the resolvable type definition, the value specifies the content of the element as a plain string, following the structure given by the type definition.

An example for this mechanism is shown by a listing below, wherein a color is defined using soft-typing:

```
     insert { circle {
          name: "my_circle"
          radius: 5
          color: {
               key: "http://schema_RGB",
               value: "red(123), green(43), blue(72)"
          }
     }
```

The key specifies a resolvable type definition and the value is a string that specifies the color according to the definition of the type.

A major difference of the GraphQL data model compared to more generic languages including SPARQL is that values in GraphQL are treated as strings. This has the consequence that the »value« element is the last child in the graph, or, in other words, a leaf.

While leafs in generic languages are typed children of the color element, in the case of soft-typed languages such as GraphQL, the content of the soft-typed value element cannot be accessed by a query. A sample query as shown below:

```
     getCircle (name: "my_circle")
     {
          radius
          color
     }
```

would not be able to implement a query »getCircle« in a way that a query for all circles with a specific red value is possible, since the soft-typed color element is not known and it is not guaranteed that it defines a red value at all. Hence, the selection part of the query in the listing shown above can only specify »color« without any further detailing on the sub-elements.

As it is not possible to introduce a flexible hard-typing approach with type importing functionality in a graph language, such as GraphQL, the embodiments described hereinafter are implementing a novel approach in order to extend graph queries for overcoming their present limitations.

The basis for this approach according to embodiments of the invention is a highly flexible mechanism of querying hard-typed as well as soft-typed elements. The elements of the graph are primarily using known type - i.e. hard-typed - definitions. Additionally, elements can utilize a soft-typing approach by defining a key-value pair, wherein the »key« part is used for a type definition.

A sample code for a manipulation is shown below:

```
 insert { circle {
     id: 123456
     name: "gray_circle"
     radius: 5
     color: {
          key: "http://schema_RGB_Transparency",
          value: "red: 123, green: 43, blue: 72 transparency:
          20"
     }
     location: [23.7582, 43.23442]
 }
```

The GraphQL data model readily contains »circle« elements with sub-elements id, name, radius, color, and location, the latter sub-element location expressed by coordinates, e.g. »23.7582, 43.23442«. In the sample code shown above, however, a new circle is added to the system using the »insert« function. This addition is a manipulation of the graph data base. The color element is soft-typed defining a key-value pair »color«, wherein the »key« part is used for a type definition using a scheme »http://schema_RGB_Transparency« and wherein a value follows the defined structure. The value of the defined color element comprises not only values for red, green, and blue, but also for transparency.

So far, it has not been possible to formulate queries in GraphQL which address any sub-element content (e.g. »red: 123«) within a value assignment such as shown by the color value:
value: "red: 123, green: 43, blue: 72 transparency: 20"
in the code sample shown above. The embodiments, however, introduce a query mechanism allowing for such query.

According to an embodiment, processing a graph query includes the steps of decomposing the query request message QRQ into a plurality of query components, identifying or parsing query components which query syntax are not conforming to the graph query syntax and assigning these - second - query components to a processing engine PCE for processing second query components.

Such second query components whose query syntax is not in conformance with the graph query syntax are also referred to as out-of-band query components. Second query components may include function calls which are not part of the graph query syntax, or specifically: GraphQL syntax. The processing of these second query components is assigned to a processing engine PCE for processing such out-of-band query components. Finally, the results of the out-of-band second query components are aggregated or combined with the results of the »regular« query components, wherein »regular« means that these - first - query components are expressed in the graph query syntax and that they are processed in a graph query execution engine QEE.

The following two code samples introduce such out-of-band second query components in the form of different kinds of function calls. A first code example is querying for a circle defining desired properties of that circle:

```
 circle (
     name: fq_regularExpression("gr(a|e)y_circle")
     radius: fq_smallerThan(100)
     color: {
          key: fq_equals("http://schema_RGB_Transparency")
          value: fq_{
               red: fq_greaterThan(100)
               green: fq_equals(43)
               transparency: fq_smallerThan(30)
          }
     )
     location: fq_boundingBox([20,40, 30,50])
 {
     id
     fs_makeHex(color)
 }
```

The codes sample as shown above demonstrates a number of function calls, wherein:
- A function call fq_regularExpression () is used for querying a circle by a specific regular expression, which is delivered by the argument "gr(ale)y_circle". In this example, the argument considers alternative spellings of the name of the queried circle.
- A function call fq_smallerThan () is used for querying an element by a maximum value of a property, in the example shown above for querying a circle by its maximum radius, which is delivered by the argument 100. A function call fq_greaterThan () is used for querying an element by a minimum value of a property, in the example shown above by a red value of more than 100.
- A function call fq_equals() is used for querying an exact match with a value, which is delivered by the argument. For example, the function call fq_equals("http://schema_RGB_Transparency") queries for an exact string match with the delivered argument, the fuction call fq_equals(43) queries for a match with a value of 43, here a green value of 43.
- A sub-element function call fq_{} as used in the specific code section:

   ```
          fq_{
               red: fq_greaterThan(100)
               green: fq_equals(43)
               transparency: fq_smallerThan(30)
          }
```

   enables the definition of a detailed search within the value string of a soft-typed element, such as a color defined in the insert code sample shown further above. In the example above, the sub-element function defines search criteria for the sub-elements red, green and transparency of the color element. Again, query functions can be applied within the search on sub-elements, e.g. querying for a transparency value being smaller than 30.
- A function call fq_boundingBox() is used for querying a circle within a particular region or »bounding box«, which is delivered by the argument [20,40, 30,50].
- A function call fs_makeHex(color) is used for computing a hexadecimal value out of the color element. Whereas the function calls described above are used for defining queries, this function call defines a select function out of a group of general select function calls fs_*() allowing for a manipulation of data. These select functions are located in the selection part of the query shown above.

A second code example is again querying for a circle defining desired properties of that circle using a function call for a powerful SPARQL search:

```
 circle (
     name
     radius
     color: {
          value: fq_sparql("PREFIX
          p:http://schema_RGB_Transparency
                            SELECT value WHERE {color p:red value}")
     location
     {
     id
 }
```

The second code sample shown above demonstrates a powerful function call fq_sparql{}, which is used to make a structured query within a string value using a SPARQL search. This is useful when the data is modeled in RDF-based manner. In this sample, the query would response with the red value 123.

SPARQL (a recursive acronym for SPARQL Protocol and RDF Query Language) is a query language for databases able to retrieve and manipulate data stored in a Resource Description Framework (RDF) format. RDF is a data model describing resources in the form of triples, i.e. subject-predicate-object expressions. While the subject denotes the resource, the predicate denotes traits or aspects of the resource, expressing a relationship between the subject and the object.

In some cases, a relational database may be used to store information in RDF triples. For example, lists of entities, and relationships between the entities, may be stored in various types of tables in a relational database, thereby representing the triples, in some manner, in the relational database.

Like other forms of RDF data, the triples define a graph expressing relationships between various entities. One may want to execute queries that perform various types of reasoning on the graph.

Relational databases typically expose a relational query language, e.g. Structured Query Language or SQL, which provides powerful features to access, and to perform various kinds of querying on the tables in a relational database.

However, relational query languages like SQL are less effective for performing querying on a graph structure. SQL implements relational algebraic operations, such as the various types of joins. These operations perform querying on the tables, and relationships between the tables, in a relational database. However, depending on the way in which the graph structure is represented by the data in the relational tables, relational query languages may be ineffective at probing the structure of that graph. An execution of SPARQL queries performing querying on the graph structure represented by the information contained in the tables is therefore more advantageous in many cases.

All function calls introduced above are part of a second or out-of-band query component. Referring back to the figure, the processing of both, first and second query components is further detailed.

If one of these functions is called within a query request message QRQ having a general structure of a graph query syntax, e.g. a restricted language such as GraphQL, the second query component comprising one of more of said function calls will be identified and assigned to a »backend«, which means that queries and selection operations of these function calls are continued out of band. The »backend«, i.e. the one of the processing engines PCE, hosts the implementation of said functions, which are called to query or select the data.

Regular first query components, i.e. code lines in conformance with the graph query syntax are processed by the graph query execution engine QEE thereby exchanging or amending data with a graph database of one or more of the databases DBS.

After results for the query components are received from the graph query execution engine QEE and one of the processing engines PCE, these results are aggregated by the message handler CMD and included in the response QRS answering to the client CLT the query request message QRQ. Alternatively, said results are aggregated by the query execution engine QEE or by a co-operation between the query execution engine QEE and the message handler CMD.

In summary the embodiments have advantages as follows:
- Restricted graph query/manipulation languages can be extended to support more flexible search and selection;
- Restricted graph query/manipulation languages can be extended to support flexible insertion and retrieval of new types according to soft-typing, which overcomes the static hard-typed character;
- The efficiency in terms of performance & scalability of the restricted graph language largely remains;
- Easy programmability of restricted graph query/manipulation languages such as GraphQL remains;
- The approach combines the strength of the efficient strict search of GraphQL with flexible search of e.g. SPARQL.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for processing a query including the steps of:
- receiving a query request message (QRQ) expressed in a graph query syntax;
- decomposing the query request message into a plurality of query components;
- identifying at least one first query component expressed in a graph query syntax and assigning said first query component to a graph query execution engine (QEE) for processing the first query component;
- identifying at least one second query component which query syntax is not conforming to the graph query syntax and assigning said second query component to a processing engine (PCE) for processing the second query component;
- receiving results for the query components of the graph query execution engine (QEE) and the processing engine (PCE); and;
- aggregating the results received to generate a response (QRS) to the query request message (QEE).

2. The method of claim 1, wherein the graph query syntax is GraphQL.

3. The method of claim 1, wherein processing the first query component includes accessing or amending at least one graph database by the query execution engine (QEE).

4. The method of claim 1, wherein processing the second query component includes accessing or amending at least one graph database by the processing engine.

5. The method of claim 1, wherein the processing engine accesses at least one relational database.

6. The method of claim 1, wherein the second query component comprises at least one function call referencing a function provided by the processing engine (PCS).

7. The method of claim 1, wherein the query request message (QRQ) is submitted by an entity (CLT), further comprising an action of presenting the response (QRS) to the entity (CLT).

8. A message handler for processing a query comprising:
- a computing device (CMD); and;
- a computer program having program modules executable by the computing device (CMD), the computing device being directed by the program modules of the computing device (CMD) to:
- receive a query request message (QRQ) expressed in a graph query syntax;
- decompose the query request (QRQ) message into a plurality of query components;
- identify at least one first query component expressed in a graph query syntax and assign said first query component to a graph query execution engine (QEE) for processing the first query component;
- identify at least one second query component which query syntax is not conforming to the graph query syntax and assign said second query component to a processing engine (PCE) for processing the second query component;
- receive results for the query components of the graph query execution engine (QEE) and the processing engine (PCE); and;
- aggregate the results received to generate a response (QRS) to the query request message (QRQ).

9. A computer-readable storage medium having computer-executable instructions stored thereon for processing a query, said computer-executable instructions comprising:
- receiving a query request message (QRQ) expressed in a graph query syntax;
- decomposing the query request message into a plurality of query components;
- identifying at least one first query component expressed in a graph query syntax and assigning said first query component to a graph query execution engine (QEE) for processing the first query component;
- identifying at least one second query component which query syntax is not conforming to the graph query syntax and assigning said second query component to a processing engine (PCE) for processing the second query component;
- receiving results for the query components of the graph query execution engine (QEE) and the processing engine (PCE); and;
- aggregating the results received to generate a response (QRS) to the query request message (QEE).
